# EUROPEAN PATENT APPLICATION

(11) **EP 2 070 960 A1**
(43) Date of publication of application: **17.06.2009**
(21) Application number: 08021621.1
(22) Date of filing: 12.12.2008
(51) Int. Cl.: C08F 255/10, C08J 3/24, C08L 23/22, C08L 51/04

(54) **Modified butyl rubber composition**

(30) Priority: 13.12.2007 JP 2007322393
(71) Applicant: The Yokohama Rubber Co., Ltd., Minato-ku Tokyo 105-8685 (JP)
(72) Inventor: Ashiura, Makoto, Hiratsuka-shi Kanagawa 254-8601 (JP); Kawazura, Tetsuji, Hiratsuka-shi Kanagawa 254-8601 (JP)
(74) Representative: HOFFMANN EITLE

(57) **Abstract**

A modified butyl rubber composition capable crosslink an organic peroxide and having an improved modulus and strength at break is provided.

A modified butyl rubber composition comprising a reaction product of (i) a rubber ingredient comprising a butyl rubber and (ii)(a) a compound having a nitroxide-free radical stable at ordinary temperature in the molecule thereof even in the presence of oxygen, (b) a radical initiator, (c) a bifunctional or higher radical polymerizable monomer and (d) a radical polymerizable monomer having an alkoxysilyl group, whereby.

## Description

### TECHNICAL FIELD

The present invention relates to a modified butyl rubber composition, more specifically relates to a modified butyl rubber composition having a remarkably improved modulus and strength at break.

### BACKGROUND ART

The inventors previously found that (1) a peroxide is added to a butyl rubber on which a polyfunctional radical polymerizable monomer is grafted to thereby effect the cross-linking with a peroxide and (2) a radical polymerizable monomer and a peroxide are added to a modified butyl rubber on which a 2,2,6,6-tetramethyl-1-piperidynyloxy (i.e., TEMPO) compound is grafted to thereby effect cross-linking with a peroxide (see Japanese Patent Publication (A) No. 2007-231244) and, further, in Specification of Japanese Patent Application No. 2007-110605 (filed April 19, 2007), it is found that it is possible to increase the tensile properties of the cross-linked product by using two or more types of monomers as the radical polymerizable monomer.

### DISCLOSURE OF THE INVENTION

An object of the present invention is to remarkably improve the modulus and strength at break of a peroxide cross-linkable modified butyl rubber obtained by the process previously developed by the inventors, in which a TEMPO compound is grafted to a butyl rubber, followed by reacting a polyfunctional acrylate thereto.

In accordance with the present invention, there is provided a modified butyl rubber composition comprising a reaction product of (i) a rubber ingredient comprising a butyl rubber and (ii)(a) a compound having a nitroxide-free radical stable at ordinary temperature in the molecule thereof even in the presence of oxygen, (b) a radical initiator, (c) a bifunctional or higher radical polymerizable monomer and (d) a radical polymerizable monomer having an alkoxysilyl group.

According to the present invention, by grafting, onto a butyl rubber, a compound having, in the molecule thereof, a nitroxide free radical stable at ordinary temperature even in the presence of oxygen, such as 4-hydroxy-2,2,6,6-tetramethylpiperidynyl-1-oxyl (i.e., OH-TEMPO) and further reacting the grafted product with a bifunctional or higher radical polymerizable monomer such as a polyfunctional acrylate to obtain a peroxide cross-linkable modified butyl rubber and reacting the resultant product with not only just a polyfunctional acrylate, but also a (meth)acrylate having and alkoxysilyl group such as an alkoxysilane, it is possible to remarkably improve the modulus and strength at break of the modified butyl rubber.

### BEST MODE FOR CARRYING OUT THE INVENTION

In the present description and claims, the singular form "a", "an" or "the" also includes the plural form unless the singular form is clear from the context.

The inventors engaged in studies to solve the above-mentioned problems and found that, by grafting a TEMPO compound onto a butyl rubber and further reacting the resultant product with a bifunctional or higher radical polymerizable monomer such as a polyfunctional acrylate to obtain a peroxide cross-linkable modified butyl rubber and by reacting the resultant product with not only just a polyfunctional acrylate, but further a radical polymerizable monomer having an alkoxysilyl group such as (meth)acrylate having alkoxysilane, it is possible to remarkably improve the modulus and the strength at break of the modified butyl rubber.

The butyl rubber modified by the present invention is a copolymer rubber of isobutyrene, called "butyl rubber (IIR)", and a small amount (e.g., 0.6 to 2.5 mol% of the total rubber) of isoprene or a chlorinated butyl rubber, brominated butyl rubber or other derivatives thereof. These are well known in the art. There are also many commercially available products.

The compound (a) having a nitroxide radical in the molecule thereof stable in the presence of oxygen at ordinary temperature used in the present invention is not limited to, but the following compounds may be exemplified:

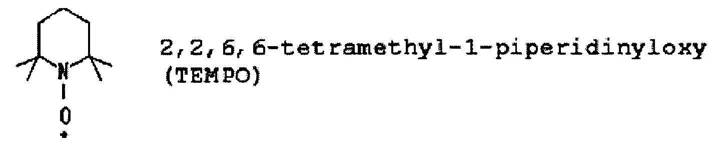

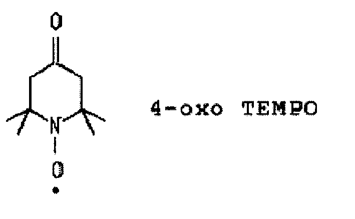

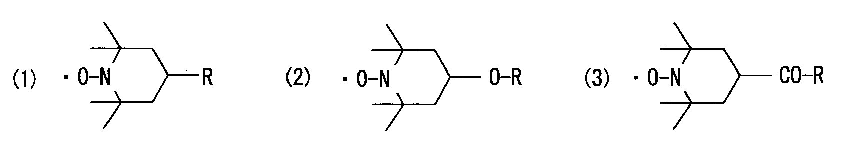

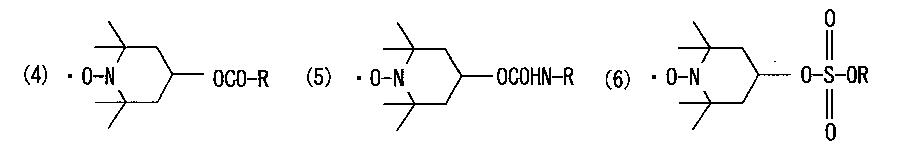

In the formulae (1) to (6), R indicates a C₁ to C₃₀ alkyl group, allyl group, amino group, isocyanate group, hydroxyl group, thiol group, vinyl group, epoxy group, thiirane group, carboxyl group, carbonyl group-containing group (e.g., succinic anhydride, maleic anhydride, glutaric anhydride, phthalic anhydride, and other cyclic acid anhydrides), amide group, ester group, imide group, nitrile group, thiocyan group, C₁ to C₂₀ alkoxy group, silyl group, alkoxysilyl group, nitro group, or other functional group-containing organic groups. 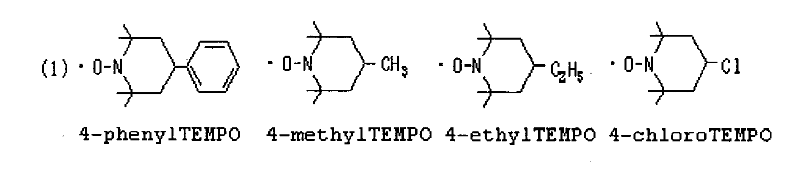 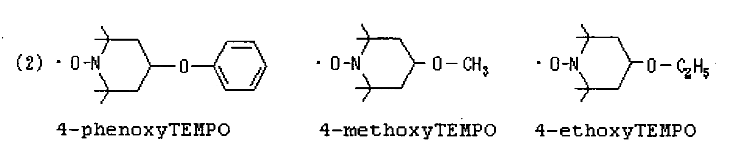 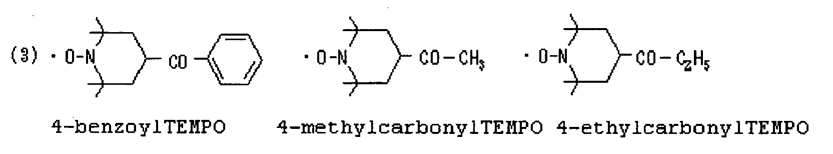 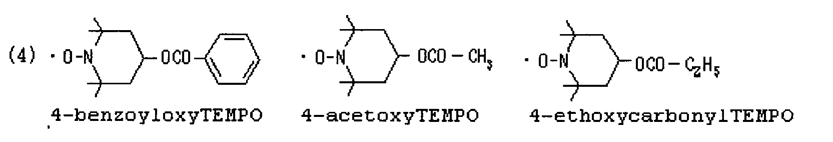 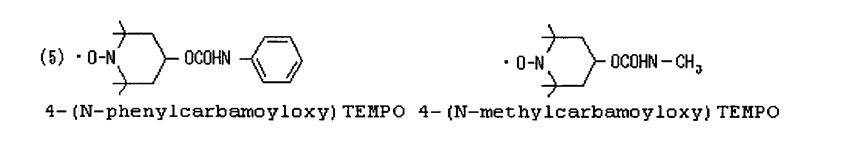 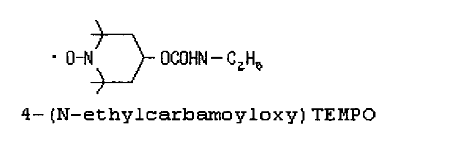 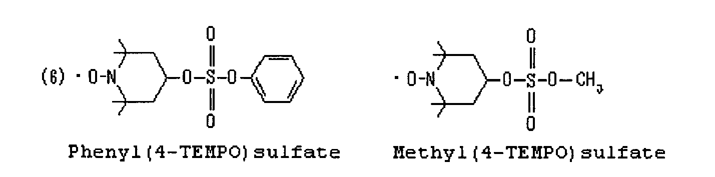 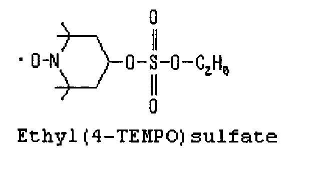 Other examples are given below: 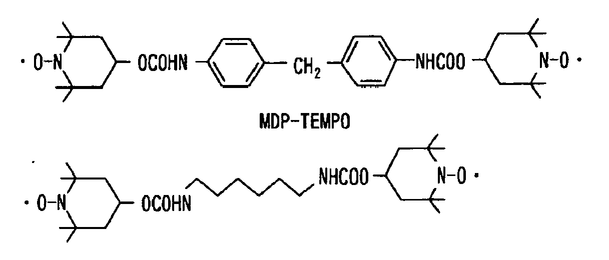 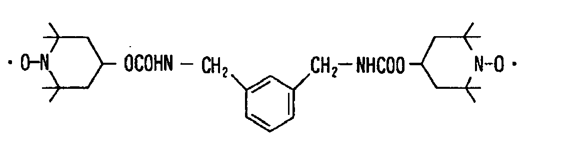 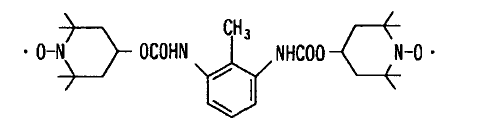 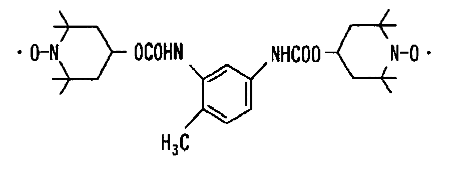 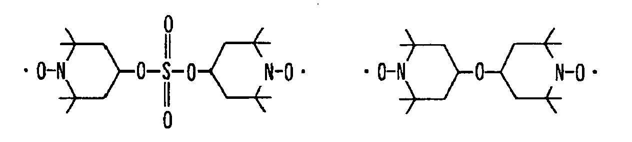 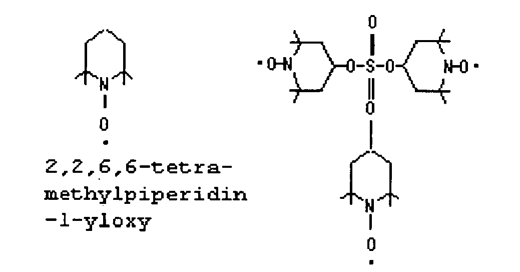 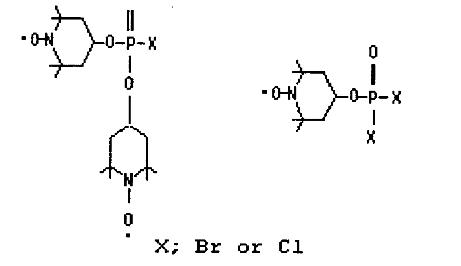 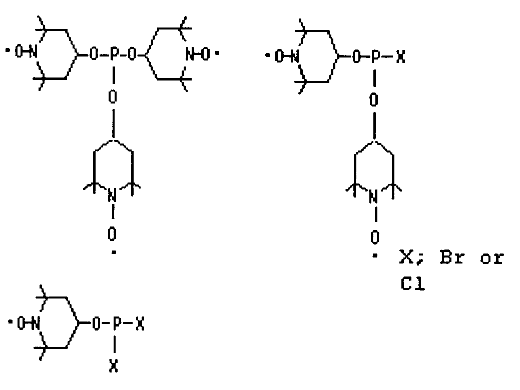 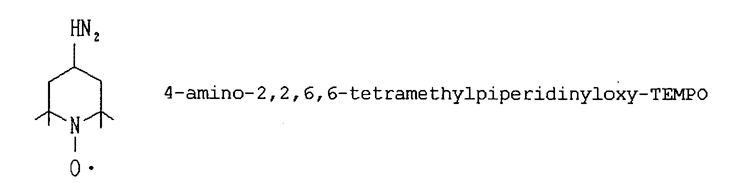 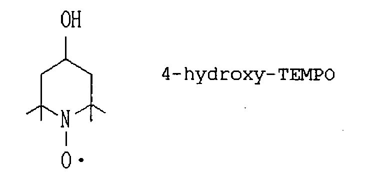 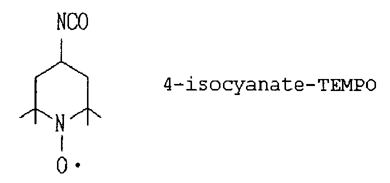 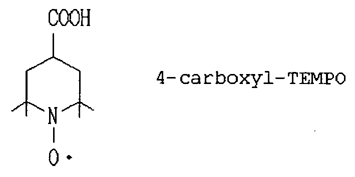 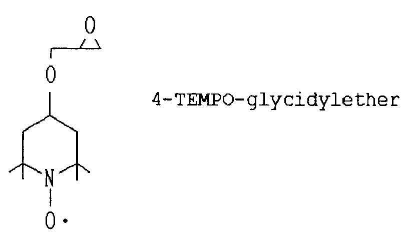 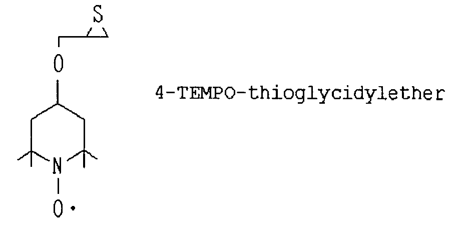 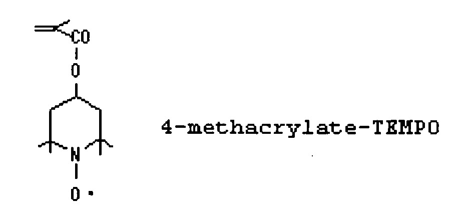 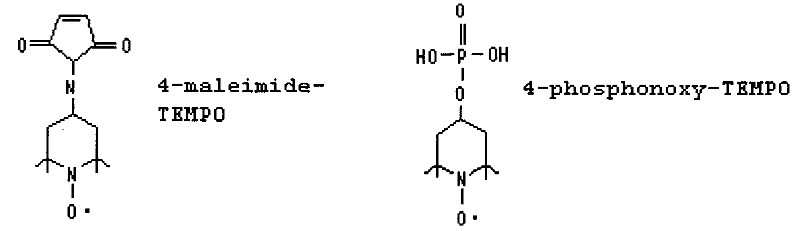 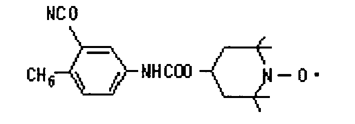 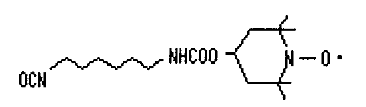 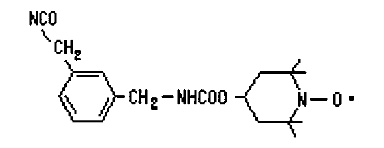 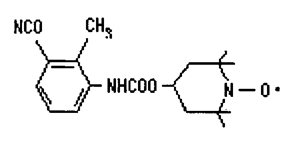 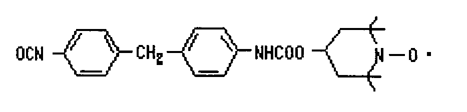 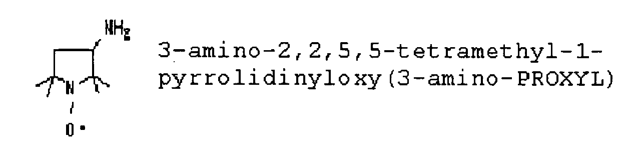 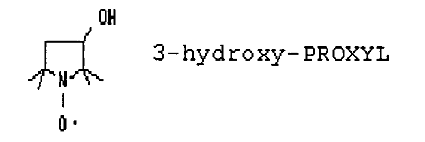 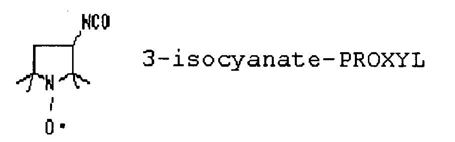 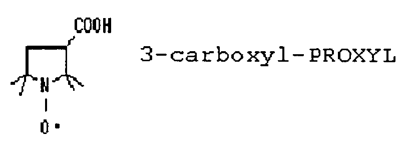 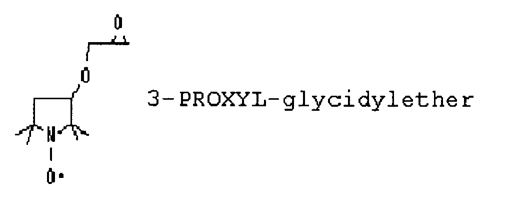 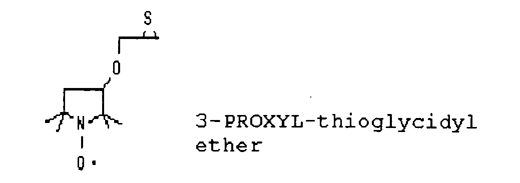 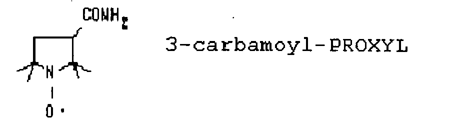 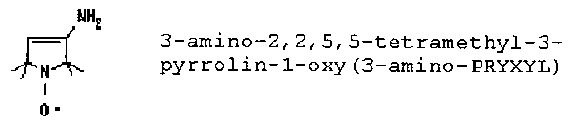 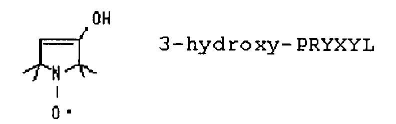 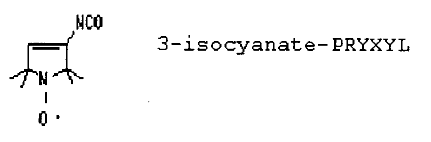 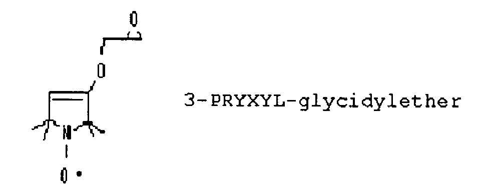 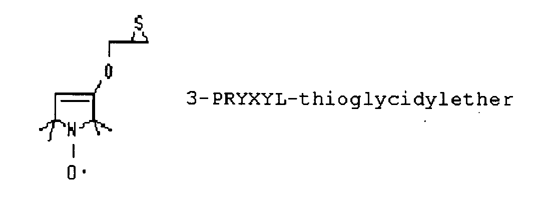 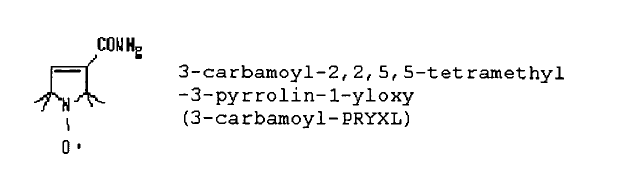 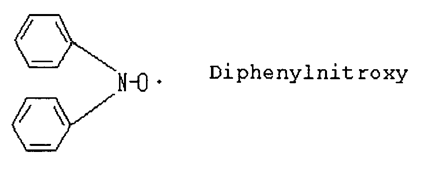 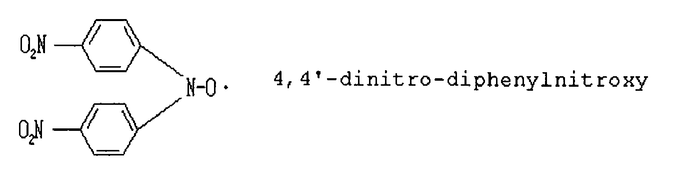 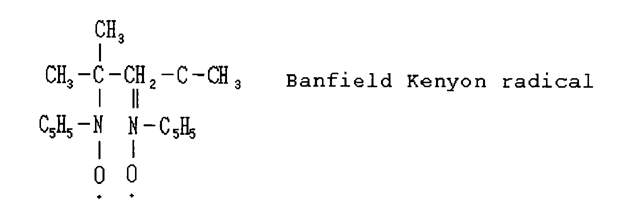 ON(S0₃K)₂ Fermi salt

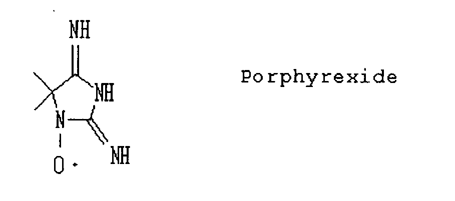

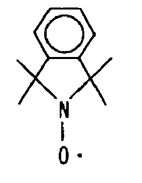

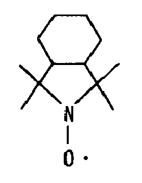

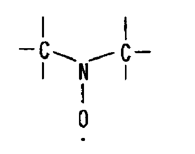

The amount of use of the compound (ii)(a) used in the present invention is not particularly limited, but is preferably 0.001 to 0.5 mole, more preferably 0.005 to 0.1 mole, based upon 100 g of the butyl rubber to be modified. If the amount used is small, the amount of modification of the butyl rubber is liable to become lower, but conversely if large, the subsequent cross-linking is liable to stop proceeding.

As the radical initiator (ii)(b) usable in the present invention, it is possible to use any radical initiator capable of introducing the compound (ii)(a) into a molecular chain of butyl rubber. Specifically, benzoylperoxide, t-butylperoxybenzoate, dicumylperoxide, t-butylcumylperoxide, di-t-butylperoxide, 2,5-dimethyl-2,5-di-t-butylperoxyhexane, 2,5-dimethyl-2,5-di-t-butylperoxy-3-hexine, 2,4-dicyclobenzoylperoxide, di-t-butylperoxy-di-isopropylbenzene, 1,1-bis(t-butylperoxy)-3,3,5-trimethyl-cyclohexane, n-butyl-4,4-bis(t-butylperoxy)valerate, 2,2-bis(t-butylperoxy)butane, diisobutylperoxide, cumylperoxyneodecanate, di-n-propylperoxydicarbonate, diisopropyl-peroxydicarbonate, di-sec-butylperoxydicarbonate, 1,1,3,3-tetramethylbutylperoxyneodecanate, di(4-t-butylcyclohexyl) peroxydicarbonate, 1-cyclohexyl-1-methylethylperoxyneodecanate, di(2-ethoxyethyl)peroxydicarbonate, di(2-ethoxyhexyl)peroxydicarbonate, t-hexylperoxyneodecanate, dimethoxybutylperoxydicarbonate, t-butylperoxyneodecanate, t-hexylperoxypivalate, t-butylperoxypivalate, di(3,5,5-trimethylhexanoyl)peroxide, di-n-octanoylperoxide, dilauroylperoxide, distearoylperoxide, 1,1,3,3-tetramethylbutylperoxy-2-ethylhexanoate, disuccinic acid peroxide, 2,5-dimethyl-2,5-di(2-ethylhexanoylperoxy)hexane, t-hexylperoxy-2-ethylhexanoate, di(4-methylbenzoyl)peroxide, t-butylperoxy-2-ethylhexanoate, a mixture of di(3-methylbenzoyl)peroxide and benzoyl(3-methylbenzoyl)peroxide and dibenzoylperoxide, dibenzoylperoxide, t-butylperoxyisobutyrate, etc. may be illustrated. Further, as typical examples of initiators able to break down at a low temperature due to the action of a redox catalyst, dibenzoyl peroxide, paramethane hydroperoxide, diisopropylbenzene hydroperoxide, 1,1,3,3-tetramethylbutyl hydroperoxide, cumen hydroperoxide, t-butyl hydroperoxide, etc. may be illustrated. By adding these radical initiators to the reaction system (e.g., mixing system and contacting system), it is possible to form carbon radicals in the butyl rubber, while by reacting the compound (ii)(a) having stable free radicals with the carbon radicals, a modified butyl rubber is obtained.

The addition amount of the radical initiator (ii)(b) used in the present invention is not particularly limited, but is preferably 0.001 to 0.5 mole, more preferably 0.005 to 0.2 mole, based upon 100 g of butyl rubber to be modified. If the amount is too small, the amount of hydrogen atoms pulled out of the butyl rubber chain is liable to fall, while conversely if too large, the main chain of the butyl rubber is liable to break down and the molecular weight is liable to be greatly decreased.

The bifunctional or higher radical polymerizable monomer (ii)(c) usable in the present invention is not particularly limited, but, for example, ethylenedi(meth)acrylate (here the expression "ethylene di(meth)acrylate" means both ethylene dimethacrylate and ethylene diacrylate, the same hereinbelow), trimethylolpropane tri(meth)acrylate, ethyleneglycol di(meth)acrylate, polyethyleneglycol di(meth)acrylate, 1,6-hexanediol di(meth)acrylate, tetramethylolmethane tri(meth)acrylate, tetramethylolmethane tetra(meth)acrylate, tris(2-hydroxyethyl) isocyanulate tri(meth)acrylate, ethoxylated trimethylolpropane tri(meth)acrylate, pentaerythritol tri(meth)acrylate, ethoxylated trimethylolpropane tri(meth)acrylate, propoxylated trimethylolpropane (meth)acrylate, propoxylated glyceryl(meth)acrylate, pentaerythritol tetra(meth)acrylate, ditrimethylolpropane tetra(meth)acrylate, dipentaerythritol penta(meth)acrylate, ethoxylated pentaerythritol tetra(meth)acrylate, polysiloxane di(meth)acrylate, various types of urethane(meth)acrylate, various types of metal (meth)acrylate, polypropyleneglycol di(meth)acrylate, N,N'-phenylene dimaleimide, bismaleimide diphenylmethane, N,N'-phenylene diacrylamide, divinylbenzene, triallyl isocyanulate, etc. may be mentioned. Among these, monomers containing electron acceptor groups in the molecule (e.g., carbonyl groups (ketones, aldehydes, esters, carboxylic acids, carboxylates, and amides), nitro group, cyano group, etc.) are preferable from the viewpoint of increasing the modification rate.

The amount of use of the bifunctional or higher radical polymerizable monomer (ii)(c) is not particularly limited, but is preferably 0.001 to 0.5 mole, more preferably 0.005 to 0.2 mole, based upon 100 g of the butyl rubber to be modified. If the amount of use is too small, the later cross-linking is liable not to proceed, while conversely if too large, the physical properties of the cross-linked product are liable to be deteriorated.

In the present invention, the ingredient (ii)(d) of the radical polymerizable monomer having an alkoxysilyl group is preferably expressed by the formula (I):

Si(OR¹)₄₋ₙ(R-A)ₙ (I)

wherein, in (I), R and R¹ independently indicate a hydrocarbon group and A indicates a radical polymerizable group, n is an integer of 1 to 3, but R, when n is 2 or 3, may be the same or different, as such a group R, preferably, for example, a methyl, ethyl, propyl, hexyl, dodecyl, octadecyl, or other alkyl group, cyclopropyl, cyclohexyl, or other cycloalkyl group, phenyl, benzyl, or other aryl group etc. may be mentioned. Further the R¹, when n is 2 or 3, may be the same or different, and, as such a group R¹, preferably for example a methyl, ethyl, propyl, hexyl, dodecyl, octadecyl, or other alkyl group, cyclopropyl, cyclohexyl, or other cycloalkyl group, phenyl, benzyl, or other aryl group, or polyethyleneglycol, polypropyleneglycol, or other polyoxyalkylene group, etc. may be mentioned.

Further, the radical polymerizable group A, when n is 2 or 3, may be the same or different. As such a group A, preferably, for example, a vinyl group, allyl group, styryl group, (meth)acryloxy group, (meth)acrylamide group, halogenated vinyl group, acrylonitrile group, etc. may be mentioned. Among these, inclusion of an electron acceptor group (e.g., carbonyl group, halogen, cyano group, etc.) is preferable. Furthermore, among these, one having a (meth)acryloxy group is particularly preferred.

The radical polymerizable monomer having an alkoxysilyl group usable in the present invention is not particularly limited, but as preferable exaples, for example, vinyl methoxysilane, vinyl trimethoxysilane, vinyl ethoxysilane, vinyl triethoxysilane, γ-methacryloxypropyl trimethoxysilane, γ-methacryloxypropyl methyldimethoxysilane, γ-methacryloxypropyl dimethylmethoxysilane, γ-acryloxypropylmethyl diethoxysilane, γ-acryloxypropyl dimethylethoxysilane, γ-acryloxypropyl triethoxysilane, N-(propyltriethoxysilane)maleimide, etc. may be mentioned.

Further, the radical polymerizable monomer having an alkoxysilyl group may be used in the hydrolyzed and condensed forms. A silicone oil type coupling agent having two or more repeating units of siloxane bonds and having an alkoxysilyl group etc., that is, an oligomer having a radical polymerizable group, may also be used.

The amount of the ingredient (ii)(d) used in the present invention is not particularly limited, but is preferably 0.0001 to 0.5 mole, more preferably 0.0003 to 0.2 mole, based upon 100 g of butyl rubber to be modified. If the amount of use is small, there is no effect in the improvement of the modulus and strength at break of the cross-linked product, and, therefore, this is not preferred. Conversely, if large, the excess (d) is liable to have a detrimental effect on the compressive set of the cross-linked product, and, therefore, this is not preferred.

In the present invention, the method for modifying the butyl rubber and the method for mixing a bifunctional or higher radical polymerizable monomer (ii)(c) and radical polymerizable monomer having an alkoxysilyl group (ii)(d) in this are not particularly limited, but for example, butyl rubber may be modified as follows. That is, a premixed mixture of the butyl rubber (i) and compound (ii)(a) and initiator (ii)(b) is reacted in a nitrogen-substituted internal kneader at a temperature of 150 to 220°C. Nitrogen substitution is preferred, but the reaction may also be performed under conditions of lean oxygen. The radical polymerizable monomer (ii)(c)and/or (ii)(d) may be mixed by kneading in a general method. Various types of additives, reinforcing fillers, and cross-linking agents may be simultaneously kneaded. These may be modified and mixed by using an internal kneader, twin-screw extrusion type kneader, single-screw kneader, roll, Banbury mixer, kneader, etc.

In a preferable embodiment of the present invention, the ingredient (ii)(a) and the ingredient (ii)(b) are first added to the rubber ingredient (i), which is then heated to preferably 150 to 220°C and reacted under a nitrogen atmosphere or lean oxygen state, then the ingredient (ii)(c) and ingredient (ii)(d) are further added and the resultant mixture is heated to preferably 120 to 220°C and reacted under a nitrogen atmosphere or lean oxygen state. By adopting this reaction sequence, it is possible to increase the amounts of the ingredients (c) and (d) grafted to the butyl rubber.

The rubber composition according to the present invention preferably further contains, based upon 100 parts by weight of the rubber ingredient containing the modified butyl rubber, carbon black and/or silica, talc, various types of clays or another reinforcing filler in an amount of 1 to 300 parts by weight, preferably 30 to 200 parts by weight, and a cross-linking agent (e.g., benzoylperoxide, t-butylperoxybenzoate, dicumylperoxide, t-butylcumylperoxide, di-t-butylperoxide, 2,5-dimethyl-2,5-di-t-butylperoxyhexane, 2,5-dimethyl-2,5-di-t-butylperoxy-3-hexine, 2,4-dicyclobenzoylperoxide, di-t-butylperoxy-di-isopropylbenzene, 1,1-bis(t-butylperoxy)-3,3,5-trimethyl-cyclohexane, n-butyl-4,4-bis(t-butylperoxy)valerate, 2,2-bis(t-butylperoxy)butane, or other organic peroxides and azo dicarbonamide, azobis isobutyronitrile, 2,2'-azobis-(2-amidinopropane)dihydrochloride, dimethyl2,2'-azobis(isobutyrate), azobis-cyanovaleric acid, 1,1'-azobis-(2,4-dimethylvaleronitrile), azobismethylbutyronitrile, 2,2'-azobis-(4-methoxy-2,4-dimethylvaleronitrile), and other azo-based radical initiators etc.) in an amount of preferably 0.05 to 15 parts by weight, more preferably 0.1 to 10 parts by weight.

The modified butyl rubber composition according to the present invention may contain, as other rubber ingredients, a styrene-isoprene-butadiene copolymer, chloroprene rubber, ethylene-propylene-diene three-way copolymer rubber, ethylene-propylene copolymer, ethylene-propylene-butene three-way copolymer, styrene-butadienestyrene block copolymer, styrene-isoprene-styrene copolymer, styrene-ethylene-butene-styrene block copolymer, styrene-ethylene-propylene-styrene copolymer, polyethylene, polypropylene, polystyrene, polyaromatic vinyl, polyolefin, polyisoprene, various types of styrene-butadiene copolymer, various types of polybutadiene, acrylonitrile-butadiene copolymer, hydrogenated acrylonitrile-butadiene copolymer, polyisobutylene, polybutene, butyl rubber, halogenated butyl rubber, styrene-p-methylstyrene copolymer, halogenated styrene-p-methylstyrene copolymer, acryl rubber, silicone rubber, fluorine rubber, epichlorohydrin rubber, various types of polymethacrylic acid ester, various types of polyether, various types of polysulfide, various types of polyvinylether, various types of polyester, various types of polyamide, cellulose, starch, various types of polyurethane, various types of polyurea, various types of polyamine, etc., but the amount of the modified butyl rubber is preferably at least 5% by weight in the rubber ingredient, more preferably at least 10% by weight.

The rubber composition according to the present invention may contain, in addition to the above ingredients, other fillers, a vulcanization or cross-linking agent, vulcanization or cross-linking accelerator, various types of oils, antioxidant, plasticizer, and other various types of additives generally added to rubber composition for a tire, or the other rubber compositions. These additives may be compounded, by a general method, to obtain a composition used for vulcanization or cross-linking. The amounts of these additives may be made the conventional general amounts so long as the object of the present invention is not adversely affected.

### EXAMPLES

Examples will now be used to further explain the present invention, but the scope of the present invention is by no means limited to these Examples.

### Examples of Preparation

The following materials were used to prepare the modified butyl rubbers 1 and 2:
IIR: butyl rubber (BUTYL301 made by Bayer) 1,3-bis-(t-butylperoxyisopropyl)benzene: (Parkadox 14-G made by Kayaku Akzo)
OH-TEMPO: 4-hydroxy-2,2,6,6-tetramethylpiperidynyl-1-oxyl (LA7RD made by Asahi Denka)
Ditrimethylolpropane tetraacrylate: (SR-355 made by Sartomer)
Methacrylsilane: γ-methacryloxypropyltrimethoxysilane (KBM503 made by Shin'etsu Chemical)

### Example of Preparation 1 (Modified IIR-1)

IIR 350.0 g, 1,3-bis-(t-butylperoxyisopropyl)benzene 24.2 g, and OH-TEMPO 32.2 g were charged into an internal Banbury mixer set to a temperature of 60°C and mixed for 10 minutes. The mixture thus obtained was kneaded in an internal Banbury mixer set to a temperature of 100°C, while substituting nitrogen for 5 minutes. While kneading, the temperature was increased to 165°C and the kneading continued for 20 minutes. Part of the polymer thus obtained was dissolved in toluene, then the polymer was isolated and purified by a reprecipitation operation. By using the purified product, which is analyzed by 1H-NMR, the introduction of a TEMPO site was confirmed. The rate of introduction was 0.360 mol%. The reaction system was returned once to 150°C, then dimethylolpropane tetraacrylate (SR-355) 11.2 g was added and the resultant mixture was kneaded, while substituting nitrogen for 5 minutes. While kneading, the temperature was increased to 185°C, then the resultant mixture was kneaded for 15 minutes. Part of the polymer thus obtained was dissolved in toluene, then the polymer was isolated and purified by a reprecipitation operation. The purified product was used for IR analysis and 1H-NMR analysis. Near 1720 cm⁻¹, carbonyl derived absorption of ester was observed. From the 1H-NMR, SR-355 derived signal was observed near 6.39, 6.10, 5.96, 4.12, and 3.30 ppm. It was confirmed that SR-355 was introduced by a structure leaving three olefins. The introduction rate was 0.12 mol%.

### Example of Preparation 2 (Modified IIR-2)

### IIR 350.0 g, 1,3-bis-(t-butylperoxyisopropyl)benzene 24.2 g, and OH-TEMPO 32.2 g were charged into an internal Banbury mixer set to a temperature of 60°C and mixed for 10 minutes. The mixture thus obtained was kneaded in an internal Banbury mixer set to a temperature of 100°C, while substituting nitrogen for 5 minutes. While kneading, the temperature was increased to 165°C and the kneading continued for 20 minutes. Part of the polymer thus obtained was dissolved in toluene, then the polymer was isolated and purified by a reprecipitation operation. By using the purified product, which is analyzed by 1H-NMR, the introduction of a TEMPO site (alkoxyamino group) was confirmed. The rate of introduction was 0.360 mol%. The reaction system was returned once to 150°C, then dimethylolpropane tetraacrylate (SR-355) 11.2 g and methacrylsilane 5.8 g were added and the resultant mixture kneaded, while substituting nitrogen for 5 minutes. While kneading, the temperature was increased to 185°C, then the resultant mixture was kneaded for 15 minutes. Part of the polymer thus obtained was dissolved in toluene, then the polymer was isolated and purified by a reprecipitation operation. The purified product was used for IR analysis and 1H-NMR analysis. Near 172 0cm⁻¹, carbonyl derived absorption of ester was observed. From the 1H-NMR, From the 1H-NMR, SR-355 derived signal was observed near 6.39, 6.10, 5.96, 4.12, and 3.30 ppm. It was confirmed that SR-355 was introduced by a structure leaving three olefins. The introduction rate was 0.015 mol%.

### Examples 1 to 3, Comparative Examples 1 to 3, and Reference Examples 1 to 3

### Preparation of Samples

In each formulation shown in Table I, the ingredients other than the vulcanization accelerator and sulfur were kneaded in a 150 cc kneader for 6 minutes. The vulcanization accelerator and sulfur were added and the mixture further kneaded by an 8-inch open roll to obtain a rubber composition.

The rubber composition thus obtained was press vulcanized in a 15 x 15 x 0.2 cm mold at 180°C for 20 minutes to form a vulcanized rubber sheet which was measured for the physical properties of the vulcanized rubber by the following test methods. The results are shown in Table I.

### Test Methods for Evaluation of Rubber Properties

State of cross-linked rubber sheet: Presheet judged visually. 50% modulus: JIS K6251 (No. 3 dumbbell use) was followed for a tensile test at room temperature to find the 50% deformation modulus.

Strength at break: JIS K6251 (No. 3 dumbbell use) was followed for a tensile test at room temperature.

**Table I**

| | Comp. | Comp. | Comp. | Ref. | Ref. | Ref. | Ex. 1 | Ex. 2 | Ex. 3 |
|---|---|---|---|---|---|---|---|---|---|
| | Ex. 1 | Ex. 2 | Ex. 3 | Ex. 1 | Ex. 2 | Ex. 3 | | | |
| Formulation (parts by weight} | | | | | | | | | |
| Unmodified IIR¹⁾ | 100 | 100 | 100 | - | - | - | - | - | - |
| Modified IIR-1²⁾ | - | - | - | 100 | 100 | 100 | - | - | - |
| Modified IIR-2³⁾ | - | - | - | - | - | - | 100 | 100 | 100 |
| Talc⁴⁾ | 100 | 100 | 100 | 100 | 100 | 100 | 100 | 100 | 100 |
| Carbon black⁵⁾ | 50 | 50 | 50 | 50 | 50 | 50 | 50 | 50 | 50 |
| Stearic acid⁶⁾ | 1 | 1 | 1 | 1 | 1 | 1 | 1 | 1 | 1 |
| Zinc White⁷⁾ | 5 | 5 | 5 | 5 | 5 | 5 | 5 | 5 | 5 |
| DCP⁸⁾ | 2 | 2 | 8 | 3.5 | 3.5 | 3.5 | 3.5 | 3.5 | 3.5 |
| TMPT⁹⁾ | - | 12 | - | - | - | - | - | - | - |
| A-TMPT¹⁰⁾ | - | - | - | - | 5.2 | 7.0 | - | 3.5 | 7.0 |

| Evaluated properties | | | | | | | | | |
|---|---|---|---|---|---|---|---|---|---|
| State of cross-linked rubber sheer | Sheet | Sheet | Sheet | Sheet | Sheet | Sheet | Sheet | Sheet | Sheet |
| | not | not | not | form- | form- | form- | form- | form- | form- |
| 50% modulus {MPa) | formable | formable | formable | able | able | able | able | able | able |
| Breakage Strength at break (MPa) | - | - | - | 1.2 | 2.6 | 2.6 | 2.2 | 3.7 | 4.5 |
| | - | - | - | 2.5 | 3.2 | 3.1 | 3.8 | 4.7 | 5.0 |

| | | | | | | | | | |
|---|---|---|---|---|---|---|---|---|---|
| Notes to Table I ¹⁾ Butyl rubber: BUTYL301 made by Bayer ²⁻³⁾ Synthesized by Examples of Preparation 1 and 2 ⁴⁾ Talc F: made by Nippon Talc ⁵⁾ Asahi#50: made by Asahi Carbon ⁶⁾ Beads Stearic Acid YR: made by NOF Corporation ⁷⁾ Zinc White Type 3: made by Seido Chemical Industrial ⁸⁾ Dicumyl peroxide: made by NOF Corporation, Percumyl D-40 (peroxide) ⁹⁾ Trimethylolpropane trimethacrylate: made by Shin-Nakamura Chemical, NK ester A-TMPT (cross-Linking aid) ¹⁰⁾ Tritrimethylolpropane triacrylate: made by Shin-Nakamura Chemical (cross-linking aid) | | | | | | | | | |

### INDUSTRIAL APPLICABILITY

According to the present invention, by reacting a butyl rubber (i) with a compound (ii)(a) having a nitroxide-free radical in the molecule thereof stable at ordinary temperature even in the presence of oxygen, such as a TEMPO derivative, a radical initiator (ii)(b), a bifunctional or higher radical polymerizable monomer (ii)(c) and a radical polymerizable monomer (ii)(d) having an alkoxysilyl group, it is possible to obtain a modified butyl rubber composition capable of cross-linking with an organic peroxide and possible to remarkably increase the modulus and strength at break of the cross-linked product of the modified butyl rubber composition thus obtained, and, therefore, it is possible to sufficiently maintain the properties of butyl rubber such as the heat resistance, air barrier property, vibration absorption, etc. and possible to use this as tire tubes, bladders, roofings, conveyor belts, hoses, cables, vibration absorbing rubber, electronic parts, various types of industrial products, etc.

## Claims

1. A modified butyl rubber composition comprising a reaction product of (i) a rubber ingredient comprising a butyl rubber and (ii)(a) a compound having a nitroxide-free radical stable at ordinary temperature in the molecule thereof even in the presence of oxygen, (b) a radical initiator, (c) a bifunctional or higher radical polymerizable monomer and (d) a radical polymerizable monomer having an alkoxysilyl group.

2. A modified butyl rubber composition as claimed in claim 1, wherein the ingredient (ii)(a) and the ingredient (ii)(b) are first added to the rubber ingredient (i) to thereby be reacted together, then the ingredient (ii)(c) and ingredient (ii)(d) are further reacted thereto.

3. A modified butyl rubber composition as claimed in claim 1 or 2, wherein the radical polymerizable monomer of the ingredient (ii)(c) includes an electron acceptor group as a radical polymerizable group.

4. A modified butyl rubber composition as claimed in any one of claims 1 to 3, wherein the radical polymerizable monomer of the ingredient (ii)(d) contains an electron acceptor group as a radical polymerizable group.

5. A modified butyl rubber composition as claimed in any one of claims 1 to 4, further comprising 1 to 300 parts by weight of a reinforcing filler, based upon 100 parts by weight of the rubber ingredient containing the modified butyl rubber.

6. A modified butyl rubber composition as claimed in any one of claims 1 to 5, further comprising 0.05 to 15 parts by weight of a cross-linking agent, based upon 100 parts by weight of the rubber ingredient containing the modified butyl rubber.

7. A modified butyl rubber composition as claimed in claim 6, wherein the cross-linking agent is an organic peroxide.
